# EUROPEAN PATENT APPLICATION

(11) **EP 1 694 039 A1**
(43) Date of publication of application: **23.08.2006**
(21) Application number: 06110245.5
(22) Date of filing: 21.02.2006
(51) Int. Cl.: H04M 1/663, H04Q 7/38

(54) **Messaging and information system**

(30) Priority: 21.02.2005 GB 0503541
(71) Applicant: Orange Personal Communications Services Ltd., Bradley Stoke, Bristol BS32 4QJ (GB)
(72) Inventor: Sage, Mark, Bradley Stoke, Bristol BS32 4QJ (GB); George, Tellis, Bradley Stoke, Bristol BS32 4QJ (GB); Maddock, Jennifer, Bradley Stoke, Bristol BS32 4QJ (GB); Bello, Paul, Bradley Stoke, Bristol BS32 4QJ (GB); Humphries, Karl, Bradley Stoke, Bristol BS32 4QJ (GB)
(74) Representative: Spaargaren, Jerome

(57) **Abstract**

A messaging and information system in which a called party who does not wish to take a call on a user terminal can send a message to a calling party, and set up a reminder in the user terminal to remind him to call the calling party back. The content of the message and the reminder is linked, so that the time delay associated with an alarm on the reminder corresponding to this message can be arranged to be a time mentioned in the message. The telephone number of the calling party is associated with the reminder in the calendar, so that the called party can easily contact the calling party.

The message selection may be performed manually by the called party on receipt of an incoming call, where the user is presented with a number of message options, from which a message can be selected by pressing a key. Alternatively the message selection may be performed automatically when the user terminal is in a certain mode. Furthermore, it is possible to send a message automatically to a calling party whose number is stored in a certain group in the memory of the user terminal (or on the network). In this way the message content or style can be tailored to different groups of people.

Furthermore, the system can be set up so that no reminder messages are set up for certain types of caller, or so that a counter corresponding to the number of times the caller has tried to contact the user is incremented.

## Description

### Field of the Invention

The present invention relates to a messaging and information system, in particular but not exclusively for use in mobile communications networks.

### Background of the Invention

The Global System for Mobile Communications (GSM) system, in common with other mobile communication systems, supports a variety of services. One such service is a speech service, for supporting voice calls on a speech traffic channel. Other services include a short message service (SMS) which is used for transmitting alphanumeric messages in the system on a low rate data traffic channel. As is known in the art, a user of a mobile station may generate a message by input to a user interface device, and transmit the message, along with the directory number of the terminating station for the short message, to the network.

A communications network such as a GSM network typically supports a number of mobile user terminals or units (as will be described in greater detail below), which are adapted for making and receiving telephone calls, and receiving and sending messages. Using such services described above users of these mobile stations typically keep the mobile station with them at all times which means that the user is alerted to the presence of incoming calls, even when it is not convenient to take an incoming call from a calling party. It is known for the user to reject the incoming call by selecting appropriate keys on the mobile station in the case that they do not wish to take the call. The calling party would then typically be presented with a busy signal or alternatively, may be connected to a voicemail service associated with the user.

As described in EP 0 763 958 a message can automatically be sent in response to user input by way of responding to an incoming call: a plurality of messages are stored for sending to a calling station, which, in response to a user pressing a reject button, are made available for selection. Any messages that the user selects are then forwarded to the calling party, and the content of these messages enable the caller to see why the call has been rejected.

It is an object of the present invention to provide an improved messaging and information system.

### Summary of the Invention

In accordance with a first aspect of the invention there is provided a messaging and information system for use in a telecommunications network, said messaging and information system being for use by a user of a user station to transmit a message to a remote party and to provide the user with message-associated information via said user station, the remote party being identified by means of a telephone calling identifier, said system comprising:
means for storing data providing at least one predetermined defmition of message content to be sent to a remote party;
means for storing data providing at least one predetermined definition of at least one characteristic of message-associated information to be provided via said user station,
wherein said system is arranged to associate a said definition of message content with a said definition of at least one characteristic of message-associated information to form a combination of a) message content and b) at least one characteristic of message-associated information,
said system further comprising:
means for, in response to a trigger event, causing activation of a trigger initiating the transmission of a message to said remote party, said transmitted message containing message content defined at least in part by said definition of message content in said combination; and
means for providing a user with access to message-associated information via said user station, said provision of access to message-associated information having at least one characteristic defined at least in part by said definition of message-associated information in said combination, and said provision of access to message-associated information further including provision of access to a telephone calling identifier of the remote party to whom the message is transmitted in response to said trigger event.

The invention allows a user to transmit a predefined message to a remote party with particular convenience when it is inconvenient for the user to take part in a call with the remote party, and the user can be reminded to contact the remote party of the message by means of message-associated information, using predefined characteristics for the message-associated information. The provision of access to message-related information includes the provision of access to a telephone calling identifier to allow a call to be placed to the remote party as a follow-up to the message, when convenient to the user. The telephone calling identifier may be any identifier which allows a voice or video call to be placed to the remote party, and typically will be a telephone dialling number, but may take other forms, such as a username.

Preferably, the message-associated information includes a time-delay alert after a predefined delay period. Thus, in the case of the user receiving an incoming call, the user can message the calling party to indicate that he is too busy to take the telephone call, without having the distraction of answering the call, and further, he can automatically be reminded subsequently, using the message-associated information, that he should contact the calling party to return the telephone call. Further, there is preferably functionality associated with the presentation of the message-associated information, which allows the user to call the remote party directly, using the telephone calling identifier in the message-associated information, preferably by selecting an option (e.g. "call <CONTACT NAME> Yes/No?") displayed in the alert message. The option may be selected by user input, preferably a single key press, for example the main "call" key on the user station.

The system may comprise deactivating means for deactivating the message-associated information in response to an event, such as the user communicating with the remote party, prior to the provision of access to the message-associated information.

The system may be arranged to operate in a selected one of a number of different modes. There can be one or more different trigger events for which triggers are armed in each of the different modes and/or one or more of the triggers may be disarmed in one or more of the different modes. For example, the user station may be set to a "trigger-off" mode in which the messaging and information function of the invention is switched off, i.e. the trigger is disarmed, irrespective of the occurrence or otherwise of an otherwise causal trigger event, and the user station may be set to a "trigger-on" mode in which the trigger is armed and responsive to such a trigger event. Alternatively or in addition, the user station can be selectively put into one of a plurality of different "trigger-on" modes, in which different triggers are armed in relation to different trigger events, and for which different combinations of a) message content and b) at least one characteristic of message-associated information can be provided, the selection being dependent on the actual mode.

A trigger can be armed in response to a change in mode, and activated in response to one or more events such as input from the user, in the form of user input, or an incoming call. In addition or alternatively, a trigger can be armed in response to receipt of an incoming call and activated in response to a trigger event involving receipt of input subsequently received from the user. User input may be, for example, via a keypad, a joystick, similar navigation apparatus or a stylus. In the case of the message being triggered by an incoming call, the calling party can be automatically selected as the remote party to whom the message is sent.

The user may set the system to a certain mode manually, for example, when the user is entering a meeting, or a car. Furthermore, the user station may automatically detect a context and set a mode according to the detected context. For example, the user station could refer to the calendar and determine that the user is in a meeting and then change the mode of the user station. Also, the mobile station or network could have access to various mode-related rules which, for example, specify that after a specified time the user will be at work (so the phone will automatically enter "meeting" mode) or that after a specified time the user will be at home (so the phone will automatically enter "general" mode), therefore providing an automatic context-dependent operation.

As mentioned above, selecting between different modes provides a means of selecting different combinations of a) message content and b) at least one characteristic of message-associated information, since selection of a mode determines an arming of triggers relating to trigger events such as an incoming call and/or user input, and these trigger events can be explicitly linked to different such combinations. In addition, or alternatively, such different combinations may be selected during the process of message transmission, rather than by relying on the mode setting to determine the selection. In either case, whether during definition of mode settings or during the process of effecting message transmission, selection of message content and/or at least one characteristic of message-associated information could be effected by selecting one from a plurality of preset options, each representing a different combination. Selection could be realised, if interacting with a set of options presented on a display, by scrolling through a list presented on the display, or if interacting with a set of options provided via a telephone interface with a fixed node in the network, via a remote interface such as a DTMF interface or a voice command interface.

The different combinations may differ in that they include different message text (e.g. either "Sorry can't talk right now, will call in an hour" or "Sorry, can't talk right now, will call in two hours") and/or different characteristics of message-associated information (e.g. a reminder alert may be set up either in one hour's time or in two hour's time.) Preferably, the combinations may differ in both the message content and the characteristics of message-associated information, so that the two parts of the combination correspond (e.g. the message "Sorry can't talk right now, will call in an hour" is combined with a reminder alert being set up in one hour's time and the message "Sorry can't talk right now, will call in two hours" corresponds with a reminder alert being set up in two hour's time.)

In one arrangement message content is stored in the form of a record, having a predetermined format in the form of one or more fields. At least one of the fields can define a transmission format in respect of which the message content is to be delivered to the remote party, while another of the fields contains message text intended for the remote party. The message-associated information can also be conveniently stored in the form of a record having one or more fields, at least one said field being related in some way to the message content; for example the or each said characteristic can conveniently be assigned to a respective field, at least some of which are populated in dependence on, or linked to, the message content. The, or each, combination of a) message content and b) at least one characteristic of message-associated information may include, in the message content and message-associated information, user-programmable text, and/or other content, such as an image file, and/or a user-recordable voice message. Characteristics of the message-associated information include, for example, alert-settings and delays relating thereto, so that alternatively or additionally, the, or each, combination may include, in the message-associated information, user-adjustable reminder settings for modifying alert time delays.

The message sent to the remote party may comprise an SMS message, a multimedia message, and/or a speech signal.

The system may be embodied as functionality implemented in a mobile station (such as a telephone, smart phone, hero device, signature device, a personal digital assistant (PDA) or a computer terminal for example), and/or a removable identity module such as a Subscriber Identity Module (SIM) or Universal Integrated Circuit Card (UICC) and/or one or more fixed network nodes such as a switch, a voicemail system, etc.

Where the system is embodied at least in part by a fixed network node, the messaging and/or reminder functions may be originated in the network, in which case the user merely needs to indicate that he is unable to take the call and the network can deal with the messaging and reminder set-up, without any further input from the user. An advantage of having at least some of the system remote from the user station is that if the user loses or replaces the user station the functionality can still be accessed. Further, the provision of at least some of the message-associated information may be conducted via user stations other than the user station from which the transmission of the message was initiated.

In the case where the message is originated from a fixed network node, the network may be arranged to connect a calling party to a voice response service associated with a user, and the message may be transmitted in the form of predefined speech signals, i.e. a voice message. This may be particularly advantageous if the calling party is calling from a land line or other communication service which does not support other messaging types available in mobile networks.

Further aspects of the invention are set out in the appended claims, and further features and advantages of the invention will become apparent from the following description of preferred embodiments of the invention, given by way of example only, which is made with reference to the accompanying drawings.

### Brief Description of the Drawings

Figure 1 is a block diagram of a known mobile communications network;
Figure 2 is a block diagram of a mobile station according to an embodiment of the present invention;
Figure 3 is a schematic diagram showing data stored in a storage area associated with the mobile station according to an embodiment of the present invention;
Figure 4a is a schematic diagram showing an example of fields holding a predetermined definition of message content according to an embodiment of the invention;
Figure 4b is a schematic diagram showing an example of fields holding message-associated information according to an embodiment of the invention;
Figure 5 is a flow diagram showing steps involved in the operation of the mobile station shown in Figure 2 according to a first embodiment of the present invention;
Figure 6 is a timing flow diagram showing further steps involved in the operation of the mobile station shown in Figure 2 according to the first embodiment of the present invention;
Figure 7 is a schematic diagram showing data stored in a storage area region associated with the mobile station according to a second embodiment of the present invention;
Figure 8 is a flow diagram showing steps involved in the operation of the mobile station shown in Figure 2 according to a second embodiment of the present invention;
Figure 9 is a schematic diagram showing communication of data between various elements shown in Figure 1 according to a further arrangement of the second embodiment of the present invention; and
Figure 10 is a schematic diagram showing communication of data between various network elements shown in Figure 1 according to a third embodiment of the present invention.

### Detailed Description of the Invention

Embodiments of the present invention are concerned with improvements in messaging systems for mobile telephones, in particular by providing a system for sending messages to one or more remote parties, and prompting the user of the mobile telephone to perform a follow up action in relation thereto.

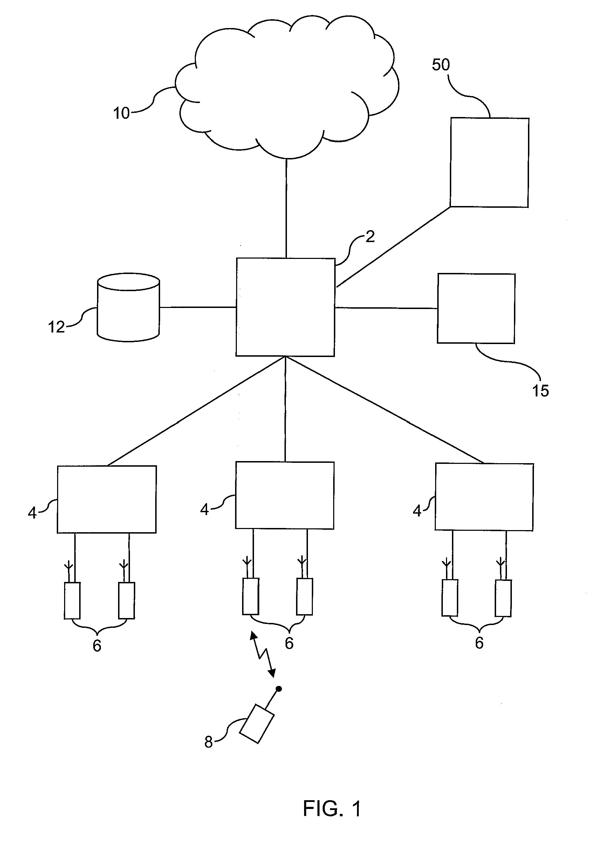

Before describing aspects of the embodiments in detail, a network environment within which embodiments are arranged to operate will be described with reference to Figure 1 which shows a GSM network, referred to as a public land mobile network (PLMN). This is in itself known and will not be described in detail. A mobile switching centre (MSC) 2 is connected via communication links to a number of base station controllers (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to a public service telephone network (PSTN), which is not illustrated. The mobile switching centre 2 is provided with a home location register (HLR) 12 which is a database storing subscriber authentication data including the international mobile subscriber identity (IMSI) which is unique to each mobile station 8. The IMSI is also stored in the mobile station in a subscriber identity module (SIM) along with other subscriber-specific information. The MSC 2 is connected to a voicemail node 50 for supporting a voicemail service for users of one of the plurality of mobile stations 8, and to network node 15, which is configured to provide various network services.

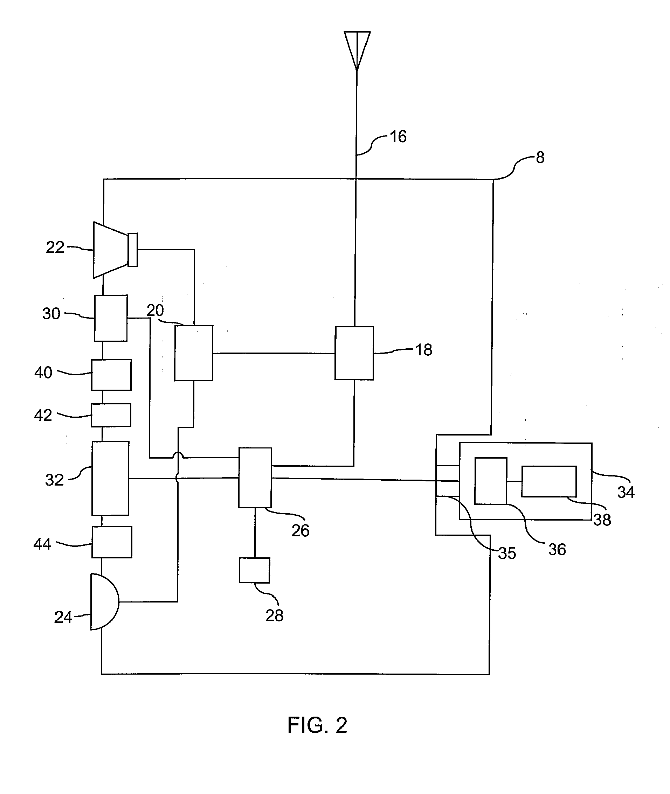

Features of a messaging and information system embodied in a mobile station will now be described with reference to Figure 2, which shows a mobile station 8 comprising a transmit/receive aerial 16, a radio frequency transceiver 18, a speech coder/decoder 20 connected to a loudspeaker 22 and a microphone 24, a processor circuit 26 and its associated memory 28, an LCD display 30 and a manual input port (keypad) 32. The mobile station is connected to a removable SIM 34 via electrical contacts 35 and further comprises a call processing system 40 and a storage area 42 for storing data for use by the call processing system 40 to effect a messaging function according to embodiments of the invention. More specifically, the call processing system 40 is arranged to change the operational mode of the mobile station 8 so as to allow selective transmission of a message to a recipient and to create an alert, in relation to some aspect of the transmitted message, at some time in the future. There is further provided a calendar system 44, responsive to data indicative of such alerts, so as to notify the user in accordance with characteristics of the alert at some time in the future. The calendar system 44 can, for example, be embodied in a conventional calendar function resident in memory 28.

The call processing system 40 is responsive to various conditions so as to select a message for transmission to a recipient and to select alert data to prompt the user to perform an action at a time in the future: these conditions include the mode of the mobile station 8, together with events such as receipt of an incoming call and explicit instruction by the user. In the case of incoming calls, the call processing system 40 can be armed to effect the selection in response to a call waiting request from the network as well as in response to a simple incoming call request. Data for use in creating the transmitted messages and alerts are stored in the storage area 42; the data include message text, alert conditions and alert text, and, in order to facilitate retrieval thereof, are linked to input data and/or caller information.

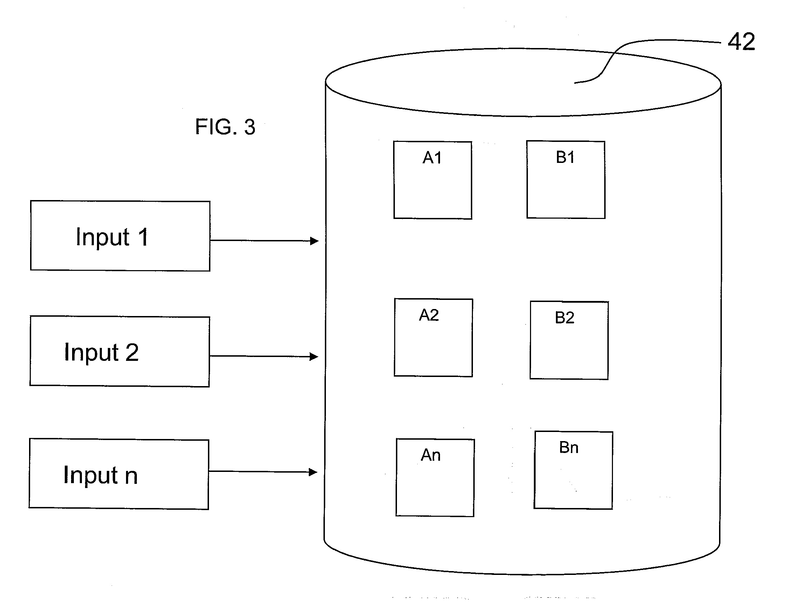

A first embodiment of the invention will now be described, in which selection of a message for transmission and indeed alert data are dependent on input data such as keypad selection. Referring to Figure 3, the message data stored in the storage area 42 are linked to inputs 1 to n and are stored in the form of first records A1 ... n and second records B 1 ... n. Each first record Ax comprises transmission data together with message text; each second record Bx comprises data indicating it is for use in creating an alert, together with various alert data and conditions. All of the first and second records A1 ... n, B1 ... n can be individually indexed in accordance with an input so as to facilitate selection thereof. Alternatively only the first records A1 ... n are indexed in accordance with an input, these being linked to one or more of the second records Bx so that, for example, selection of a first record Ax determines selection of a second record Bx; this can be particularly convenient when the conditions of the alert to be created are connected in some way to the message text transmitted to a recipient.

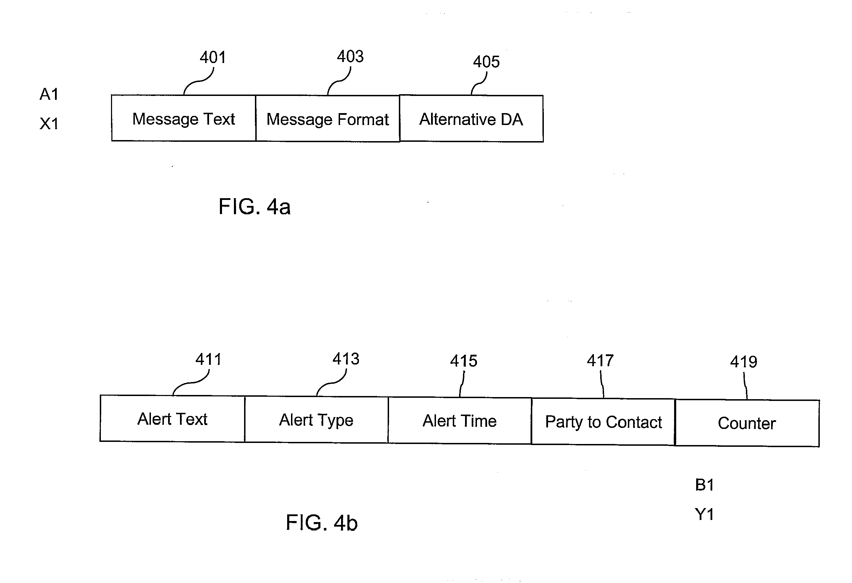

Referring to Figure 4a, the first records A1 ... n comprise message text, or other message content, 401 and format data 403 indicating a particular message format for the message text ― for example SMS (short messaging service), MMS (multimedia messaging), e-mail, speech, network control signal or any other such format. When retrieved by the call processing system 40, the system 40 processes the first record Ax, extracting the message content 401 and forwarding the message content 401 to whichever application corresponds to the format specified by the message format 403.

The message text 401 associated with a given first record Ax can be entered manually or automatically, and can, for example, include content such as "Thank you for ringing, I am in a meeting. I'll ring you later." and a different first record could include different content such as "Thank you for ringing, I am driving. I'll ring you later." When a first record Ax is linked to a second record Bx, the alert data of the second record Bx can be linked to the message text 401 of the first record Ax. For example, if the message text of a given first record Ax comprises: "Thank you for ringing, I am in a meeting. I'll ring you in one hour", the alert data corresponding to the linked second record Bx comprises data indicating that an alert should be created at a time one hour after receipt of the incoming call; and a different first record Ay could include different content such as "Thank you for ringing, I am in a meeting. I'll ring you in two hours", the alert data corresponding to the linked second record By comprises data indicating that an alert should be created at a time two hours after receipt of the incoming call.

Referring to Figure 4b, each second record B1 ... n comprises fields corresponding to an alert text, or other alert content 411, an alert signal type 413 (alarm, beep etc.), alert time 415, and a telephone dialling number of the party to whom the alert relates 417. Party field 417 is preferably stored in the form of a variable <CONTACT>, which may contain data indexed to a telephone dialling number entry in the user's contacts directory or may directly contain a telephone dialling number, and alert time field 415 is preferably stored in the form of a variable <TIME>; it will be appreciated that the third and fourth fields 415, 417 are populated in response to a retrieval request from the call processing system 40, since they are dependent on conditions associated with the retrieval request. It will also be appreciated that fields 411 and 413 are optional, since the calendar function could have pre-stored settings and entries relating thereto. The second records B 1 ... n can also include a counter field 419 which stores data indicative of with the number of times the entity (e.g. person) corresponding to the Party field 417 has contacted the user. It will be appreciated that the latter field is optional and applicable when the call processing system 40 is invoked in response to receipt of an incoming call. When operable to monitor and record the calling habits of a given calling party, the storage 42 will be equipped with software operable to increment a counter associated with the mobile station and insert data indicative of the counter value into counter field 419.

In addition to linking first and second records A1 ... n, B1 ... n to input received from the user, the records can also be linked to the identity of the caller (such as a work colleague, business contact, family member, personal friend, etc) and/or based on the user's current context (for example, in a meeting, on a train, driving, at a social engagement, on vacation etc), which can be determined from the mode of the mobile station 8 and/or on the basis of various contextual inputs. Thus: a first set of first and second records can be linked to user input only; a second set of first and second records can be linked to user input and caller identity; a third set of records can be linked to user input and context of user; a fourth set of records can be linked to caller identity only; and a fifth set of records can be linked to context of user only. The skilled person will appreciate that at least some of these sets are subsets of other sets and that combinations other than the five listed herein are possible.

The storage area 42 can be located in the user station, remote from the user station, for example on a switch MSC 2 or bespoke network node 15 (shown in Figure 1), or distributed between the user station and the network node 15. An advantage of having the storage area remote from the user station (for example on the network) is that if the user loses or replaces the user station the first and second records can still be accessed. Further, if at least part of the storage area is located on the user station it may be located on the SIM, in a storage area of the user station, or distributed between the SIM and the storage area of the user station.

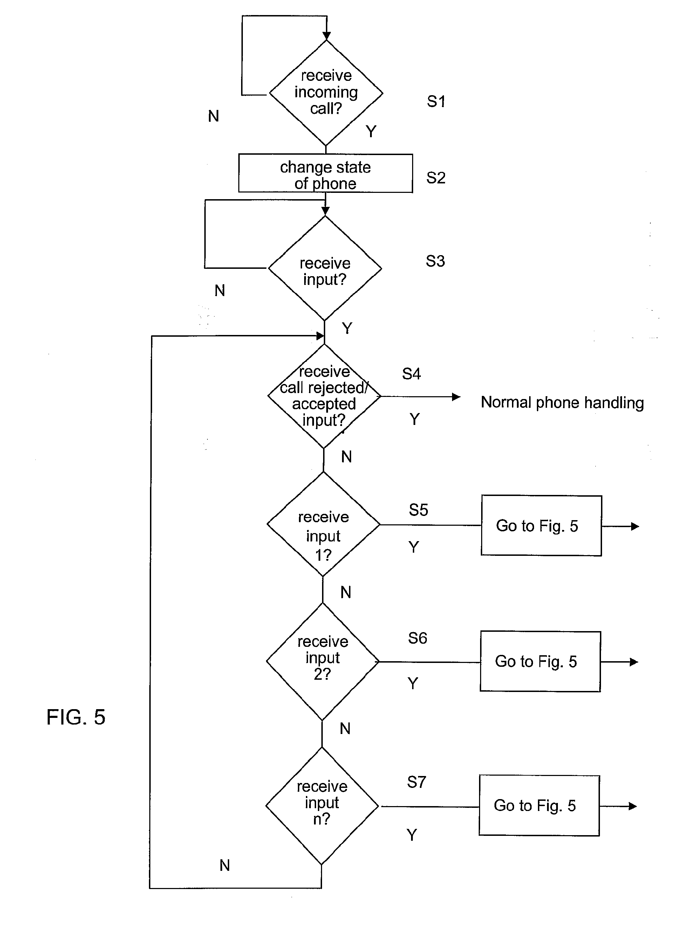

Operation of the first embodiment will now be described with reference to Figure 5, which shows the steps carried out by the call processing system 40 in response to receipt of an incoming call. The mobile station 8 polls for an incoming call (step S1), and, upon receipt thereof, the mobile station changes the operational state of the phone (step S2), causing the mobile station 8 to wait for an input from the user as indicated at step S3. In response to a first type of input from the user, either by way of answering or rejecting the call, or indicating to the caller he is busy, mobile station 8 receives or processes the input in accordance with standard call handling procedures (step S4). For example, if the user answers the call the mobile station operates in the usual manner, and the user is connected to the calling party. Similarly, if the user rejects the call (such as by pressing a call reject button, or soft button having that function) the user will not be connected to the calling party; instead mobile station 8 may direct the caller to the user's voicemail, for example.

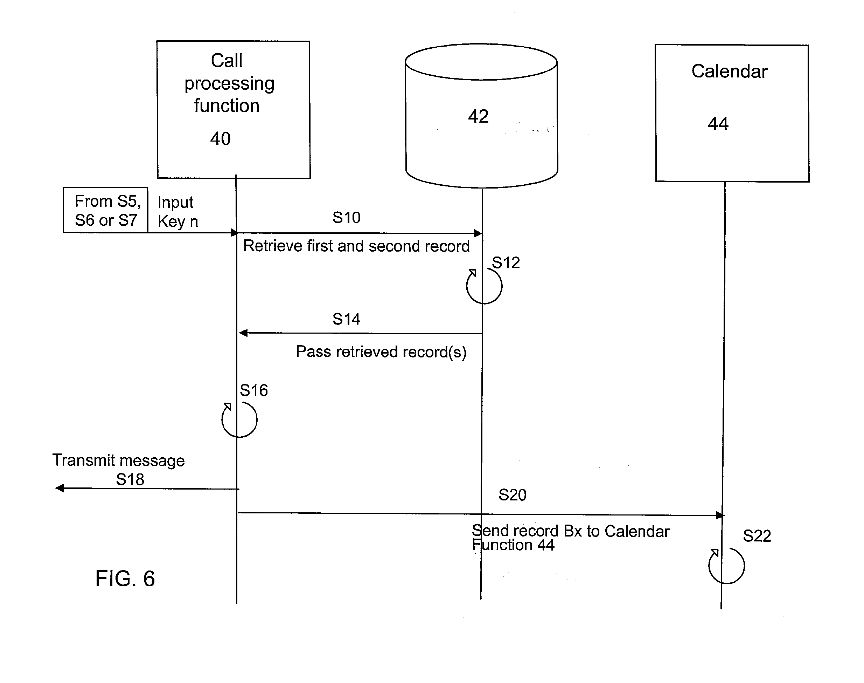

If, however, neither the call reject nor accept key has been pressed, the mobile station 8 determines, in steps S5 to S7, whether the input received corresponds to one of a predetermined set of alphanumeric keys (1, 2 or n respectively), each of which acts as a trigger event, causing the mobile terminal 8 to invoke a caller messaging function. Each key is associated with the inputs (1 to n) of Figure 3, and accordingly is associated with at least a first record Ax in the storage area 42. Therefore, depending on actual key selection, the call processing function 40 selects a first and second record Ax, Bx stored in the storage area 42 (steps S10, S12). Referring now to Figure 6, the selected first and second records, Ax, Bx are passed to, and processed by, the call processing system 40 (steps S14, S16): message text 401 corresponding to the first record Ax is passed to whichever application corresponds to the messaging format 403 specified in the first record Ax for onward transmission to the calling party, and the second retrieved record Bx is passed to the calendar function 44, which creates an alert on the basis of the alert conditions and/or alert text specified in the second retrieved record Bx (steps S20, S22). In one arrangement alert text and alert data 411, 413, 415, 417 are extracted from the second record Bx and stored in the calendar function, in the form of a reminder entry, at a time corresponding to the alert time 415. Known calendars expose a suitable interface to allow a reminder to be inserted programmatically, and, once inserted, the reminder is treated by the calendar application as a standard user-created reminder. At the alert time, the alert text 411 and details of party to call 417, are displayed to the user by the mobile station 8, enabling set up of a mobile originating call in respect of the party 417 by selection of an appropriate key of the mobile station 8.

The calendar system 44 is responsive to instructions to modify and/or delete the alert ― e.g. and/or in response to data indicative of the user manually editing the calendar and deactivating the reminder, and/or in response to receipt of data indicative of the user contacting the calling party (either calling or sending a message to the calling party). Furthermore, the reminder could be deleted in response to an indication that the reminder has been transferred elsewhere (to a storage area on the network, or on a personal computer, for example). The calendar function 44 is therefore provided with processing functionality to monitor for, and act upon, receipt of such data.

In addition, or as an alternative, to changing the operation of the phone (step S2) in response to receipt of an incoming call, this step S2 could alternatively be performed in response to user-specified input or to a change in mode of the phone (e.g. into "meeting" mode or "driving" mode). In the latter case the mobile station could omit steps S3 ― S7, thereby effectively implementing the invention without explicit input from the user.

The abovementioned arrangement relates to static first and second records A1 ... n, B1 .... n, each of which has pre-stored entries 401, 403, 411, 413, 415, 417. In an alternative second arrangement the mobile station allows real time dynamic input of data for use in populating fields including the message text field 401. In this case the call processing system 40 is arranged, in response to receipt of a specified input, to allow a user to type in or dictate suitable message content 401. For example, a first record Ax can comprise a pre-stored message format data 403, while, in relation to the message text field 401, content thereof is populated in real time. This could also apply to the alert text 411 or alert time 415 of a given second record Bx, so that the text or temporal alert data are input in real time and tailored to a specific situation.

In a third arrangement the message text 401 and message format 403 fields can be combined in real time in response to input from the selecting means. More specifically, each first record A1...An can be generated from a general template, which comprises a plurality of fields, at least some of which are initially blank and can be populated with data corresponding to fields 401, 403 selected from the storage 42, on the basis of input received from the user. Each field 401, 403 is individually indexed by inputs such as alphanumeric inputs and calling party identity, thereby enabling selection of individual fields in accordance with whatever input is received from the call processing system 40. The fields of the template can have a default content corresponding thereto, which is used in the absence of input specifying the content. In addition, the content of the individual fields (e.g. message text 401) may be input in real time, rather than being pre-stored. Furthermore, part of the message text 401 could be pre-stored in the template, and data from the storage system 42 could be used to complete the message: for example, the template could include a field comprising text and a variable <REASON>, the <REASON> field being populated upon appropriate input.

In either the static or dynamic arrangements, the storage system 42 is arranged such that one of the selectable inputs causes retrieval of a second record Bx only (this is discussed in more detail below). This option may be useful in connection with the reminder-message option which merely records the fact that a certain calling party has telephoned. Such a selection could be made, for example, where the user does not wish to take calls from a calling party.

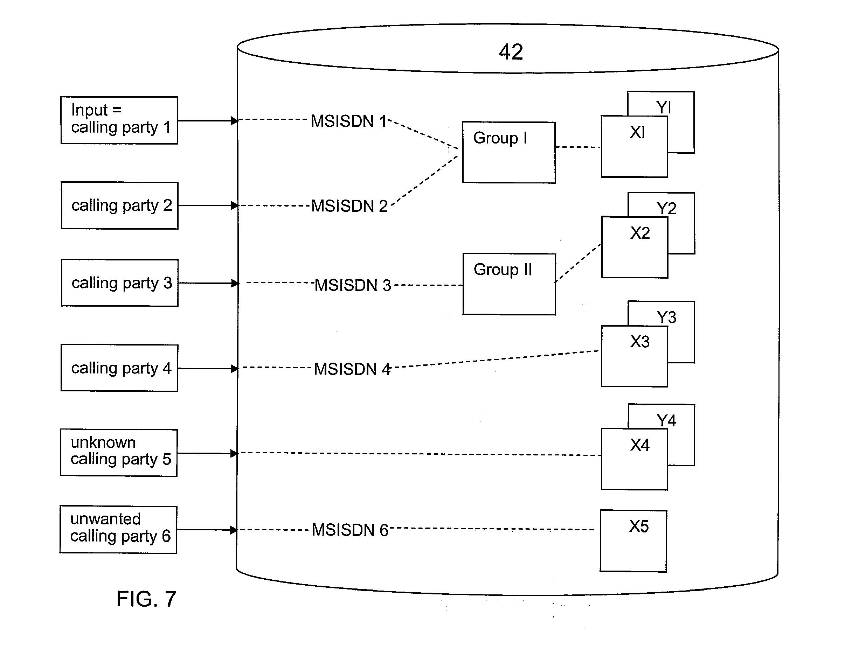

A second embodiment of the present invention will now be described, in which selection of first and second records Ax, Bx is performed by the mobile station 8 automatically and is dependent on the identity of the calling party. Figure 7 is a schematic diagram showing an arrangement of data in the storage area 42 in accordance with the second embodiment of the present invention, from which it can be seen that the storage area includes a plurality of first and second records X1 ... n, Y1 ... n, each being similar in content and format to those described in relation to a first embodiment (A1 ... n, B 1 ... n) and being indexed directly or indirectly by data identifying a calling party, in this example MSISDN (alternatively, the IP address, CLI or any other suitable identifier could be used). This facilitates retrieval of data according to the identity of the calling party. For example, data relating to calling party 1 having MSISDN 1 are linked to Group I, so the identity of calling party 1 effectively provides an index to this group. In turn, this group is linked to first and second records X1, Y1. Therefore, if a call is received from calling party 1, the storage area 42 will recognize that data relating to calling party 1 are stored in Group I, and that the first and second records X1, Y1 should be retrieved. Group I may be used to store data relating to work colleagues, for example, and the content of message text 401 may be tailored accordingly. Similarly, the data relating to calling party 2, having MISISDN 2 is also linked to Group I, and therefore the caller will be handled in the same way as caller 1 above. The data relating to calling party 3, which is identified by MISISDN 3, is linked to Group II. Group II is related to first and second records X2 and Y2, which may differ from the messages X1 and Y1, since they may only be sent to family members, for example.

For the case of a caller that is not associated with a group (caller 4), but for whom the identifier MISISDN 4 is stored in storage area 42, selection of first and second records X3, Y3 is performed on the basis of caller identity alone. In the case of caller 5, the storage area 42 does not hold an identifier relating to the caller; any such (unidentifiable) identities are linked to first and second records X4, Y4, which are, essentially, default first and second records relating to "caller unknown". The content (field 401) of these records may be impersonal to reflect the fact that the user does not know the contact details of the caller. Furthermore, as shown in relation to caller 6, some callers are only linked to a first record (here X5) only, meaning that an alert will not be set up in relation to caller 6. This configuration may be useful, for example, if the user does not wish to return calls received from a certain known party. Alternatively, a caller can be linked to a second record Yx only, in which case the calling party will not be sent a message but an alert will be set up in respect thereof.

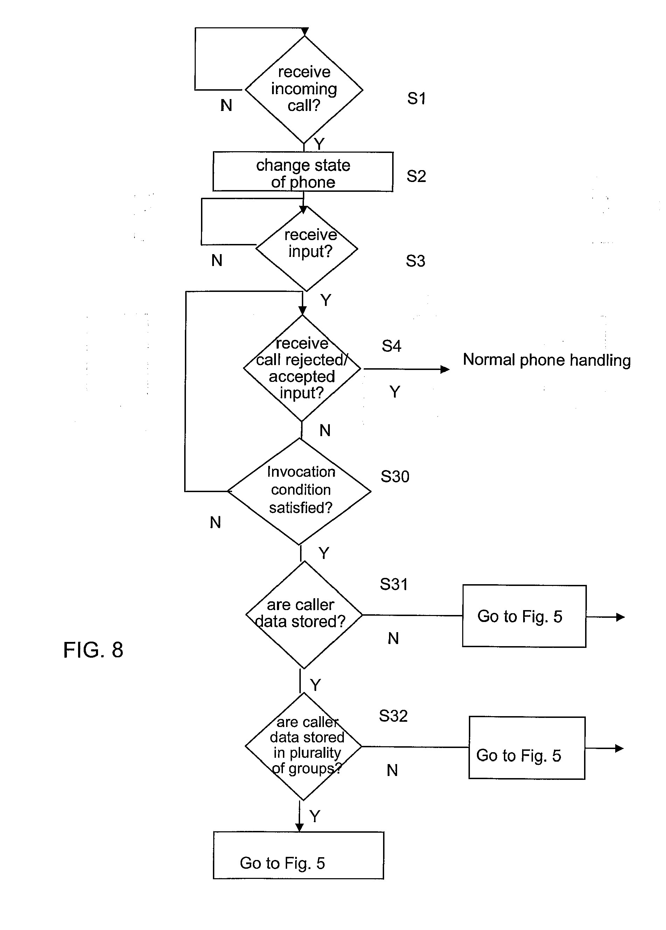

Operation of the second embodiment of the present invention will now be described with reference to the flow chart of Figure 8, for which steps S 1 to S4 are the same as those discussed in relation to Figure 4, and a discussion thereof will be omitted. Referring to step S30, after a predetermined number of rings, or upon a specific selection from the user, the call processing system 40 is triggered to send a signal to the storage area 42 where it is determined in step S31 whether data corresponding to the calling party are pre-stored. If an unknown calling party such as calling party 5 calls the user, i.e. if no data corresponding to the calling party are stored in the storage area 42, a first record X4 corresponding to an unknown party is retrieved (steps S12, S14 in Figure 6), processed by the call processing system 40 (step S16) and transmitted (step S18) to the calling party. In this case the message sent to the caller may be a generic message to reflect the fact that the mobile station of the user does not have a pre-existing record in the user's contacts directory of a contact name relating to the caller. Optionally, a reminder can be set up, on the basis of the second record Y4 (steps S20, S22), containing the telephone dialling number, and not a contact name, of the calling party.

If, however, the caller data are pre-stored in the mobile station, the call processing function proceeds to step S32 in Figure 8 and determines if caller data are stored in one of a plurality of groups. If the caller is not part of a group, for example when a calling party such as calling party 4 calls the user, first and second records X3, Y3 corresponding to calling party 4 are retrieved (steps S12, S14 in Figure 6), the first record X3 is processed by the call processing system 40 (step S16), and the message text 401 corresponding thereto is transmitted (step S 18) to the calling party; the second record Y3 is then sent to the calendar function 44 (step S20) and an alert corresponding to second record Y3 is created in step S22. The message text 401 of first record X3 might be more personal than the generic message mentioned above, but may not be tailored to the specific caller.

If it is determined that data relating to the caller (such as calling party 1) are linked to one of a plurality of groups such as group I or II, first and second records X1, Y1 corresponding to these groups are retrieved (steps S12, S14 in Figure 6), the first record X1 is processed by the call processing system 40 (step S16) and message text 401 corresponding thereto transmitted (step S18) to the calling party; the second record Y1 is then sent to the calendar function 44 (step S20) and an alert corresponding to second record Y1 is created in step S22. In this case the message X1 sent to the caller may be a personalised message according to the group to which the data are linked. For example, the user may have a different group for family, friends, work colleagues, clients etc, and the message text 401 corresponding to the callers in a group may be tailored according to their relationship with the user.

To effect the messaging and alerting functions the user may set up preferences using a WAP/web portal. The preferences could include a "contact" <-> message map whereby the user can explicitly specify which message should be sent for a particular contact or group of contacts. Furthermore, the user can also specify the "default" message for all contacts not specified in the map, and a message for contacts for which data is present in the memory, but is not present in a group. The user-entered preferences can also specify how reminders are to be added. The step of changing the operation of the phone (step S2) could alternatively be performed in response to the determination of whether the data are stored, and whether they are stored in groups (steps S31 and S32), or, as discussed in relation to the first embodiment above, step S2 could be performed in response to user specified input or to a change in mode of the phone (e.g. into "meeting" mode or "driving" mode). In the latter case the mobile station could omit steps S3 ― S7, thereby effectively implementing the invention without explicit input from the user.

As for the first embodiment discussed above, the second embodiment allows the real-time dynamic input of text to form the message text 401. For example, for a certain group of people the user may always wish to send bespoke message text, in which case message text 401 is populated on the basis of input from the user.

A further arrangement of the second embodiment will now be described, in which a first record Xx is created dynamically and the message text and format fields 401, 403 are independently indexed by the group in which the caller data is stored. Upon receipt of a call from a calling party, message text 401 and the message format 403 corresponding thereto are selected and inserted into a template so as to create first record Xx, the created first record Xx is passed to, and processed by, the call processing system 40 and sent to the calling party as described above. Furthermore, creation of a given first or second record Xx, Yx can be effected on the basis of a combination of inputs: operation of the call processing system 40 can be armed in dependence on the group in which the MSISDN of the caller is stored, and activated by receipt of a selectable input (for example from a keypad). In this way the tone of the message text (e.g. friendly, business-like, or impersonal) could be governed by a particular message template, and a user-selectable input could specify the reason the user cannot take the call, as discussed above.

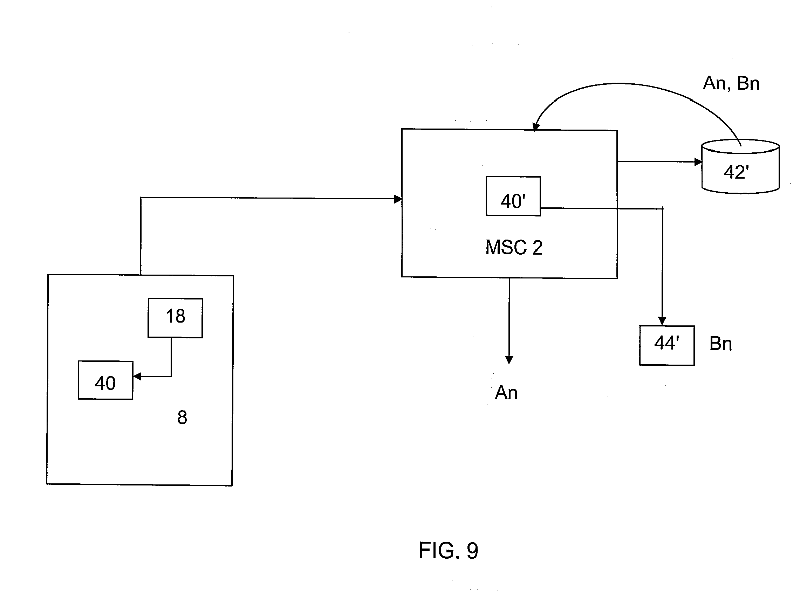

In foregoing embodiments it is assumed that the call processing system 40 is stored on, and processed by, the mobile station. Alternatively the functionality could be distributed between the mobile station and the network: as shown in Figure 9, the mobile station 8 comprises conventional components shown in Figure 2 such as a transceiver 18 and a call processing system 40, and is in radio communication with the switch MSC 2. The MSC 2 comprises a further call processing system 40', which is in communication with a storage area 42', and a calendar function 44'. In response to an incoming call, the transceiver 18 of the mobile station sends a signal to the call processing system 40 in the mobile station 8. The call processing system sends data to the transceiver, the data comprising either the key selection of the user (embodiment 1) or the identity of a calling party (embodiment 2), causing the transceiver to send the same to the MSC 2. When the MSC receives data from the mobile station 8 it inputs a request to the storage area 42' as described above, resulting in retrieval of first and second records Ax, Bx from the storage area 42', whereupon the caller processing system 40' processes the first record and sends a message corresponding thereto to the caller, and processes the second record, passing alert data corresponding thereto to the calendar function 44' on the network. Alternatively, the alert data can be sent to the mobile station and stored in an internal calendar function of the mobile station 8.

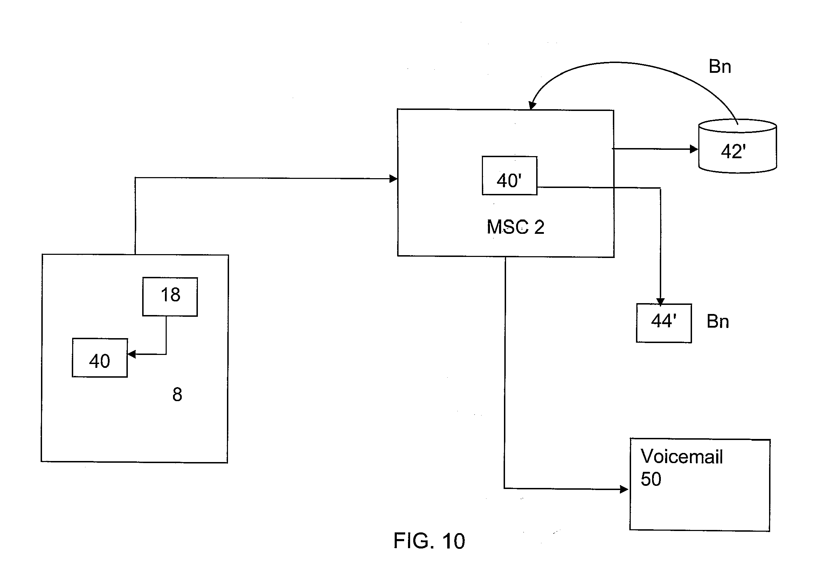

A third embodiment of the invention will now be described, in which, instead of sending a message to the caller, causes a calling party to be connected to a voicemail service associated with a user upon receiving input from the user. The operation of this embodiment will be described with reference to Figure 10, which is similar to that shown in Figure 9, but includes a voicemail server 50 connected to MSC 2. In this arrangement, the first record Ax comprises data indicative of a control signal that, when received by the MSC 2, causes the switch to connect the calling party to the user's voice mail 50. Alternatively, the caller processing system 40' in the MSC 2 can be configured so that if it only receives a second record Bx from storage area 42' it connects the calling party to the voicemail node 50. The system may be configured so that the call processing system operates in accordance with the third embodiment when the user selects a particular input, as for the other two embodiments. The user will then be reminded to contact the caller in accordance with data included in the retrieved second record Bx. Any of the formats or types of reminder message discussed above in relation to the first and second embodiments can be used for the third embodiment.

In any of the embodiments the call processing system can be configured to automatically re-direct any non-mobile originating calls to an answer phone system or a voicemail system in the manner described above.

The above embodiments are to be understood as illustrative examples of the invention. Further embodiments of the invention are envisaged. For example, in the foregoing description message text 401 corresponding to the first record A1 is sent to the calling party. However, a given first record can comprise a further field 405 specifying an address to which the message text 401 is to be sent. For example, if a calling party has contacted a user on a land line which does not support the format specified in format field 403, the message text 401 can be sent to the party specified in address field 405.

Furthermore, data associated with a second record may include an alternative address to which the alert should be sent (not shown). For example, a reminder may be sent to a mobile terminal associated with the user's assistant.

The above embodiments of the present invention can operate in conjunction with packet networks such as 3G and UMTS networks as well as with cellular networks.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A messaging and information system for use in a telecommunications network, said messaging and information system being for use by a user of a user station to transmit a message to a remote party and to provide the user with message-associated information via said user station, the remote party being identified by means of a telephone calling identifier, said system comprising:
means for storing data providing at least one predetermined defmition of message content to be sent to a remote party;
means for storing data providing at least one predetermined definition of at least one characteristic of message-associated information to be provided via said user station,
wherein said system is arranged to associate a said definition of message content with a said definition of at least one characteristic of message-associated information to form a combination of a) message content and b) at least one characteristic of message-associated information,
said system further comprising:
means for, in response to a trigger event causing activation of a trigger, initiating the transmission of a message to said remote party, said transmitted message containing message content defined at least in part by said definition of message content in said combination; and
means for providing a user with access to message-associated information via said user station, said provision of access to message-associated information having at least one characteristic defined at least in part by said definition of message-associated information in said combination, and said provision of access to message-associated information further including provision of access to a telephone calling identifier of the remote party to whom the message is transmitted in response to said trigger event.

2. A messaging and information system according to claim 1, wherein said system is configurable in a mode in which a said trigger is disarmed, and said trigger is selectively armed in response to a change in mode.

3. A messaging and information system according to claim 1 or claim 2, wherein said system is configurable in a mode in which a said trigger event comprises detection of an incoming call state for said user station.

4. A messaging and information system according to any preceding claim, wherein said system is configurable in a mode in which a said trigger is disarmed before the user station is in an incoming call state and selectively armed in response to detection of an incoming call state for said user station.

5. A messaging and information system according to any preceding claim, wherein said system is configurable in a mode in which a said trigger event comprises an instance of user input via said user station.

6. A messaging and information system according to any preceding claim, wherein said system comprises means for selecting between a plurality of different combinations of a) message content and b) at least one characteristic of message-associated information.

7. A messaging and information system according to claim 6, wherein said selection is performed at least partly in dependence on an identity of the remote party to whom the message is transmitted.

8. A messaging and information system according to claim 7, wherein said system comprises means for storing data defining a plurality of groups of identities, and wherein said selection is performed at least partly in dependence on a group in which the identity of the remote party is stored.

9. A messaging and information system according to any of claims 6, 7 or 8, wherein said selection is performed at least partly in dependence on user input, a plurality of different instances of user input being predefined for said selection.

10. A messaging and information system according to claim 9, wherein said plurality of different instances of user input are predefined as different keypad inputs.

11. A messaging and information system according to claim 10, wherein said keypad comprises a plurality of keys and wherein said plurality of different instances of user input are each predefined as actuation of a different one of said keys.

12. A messaging and information system according to any of claims 6 to 11, wherein said selection is performed at least partly in dependence on a current mode of said user station, said mode being set before said trigger event is triggered.

13. A messaging and information system according to claim 12, wherein said current mode is selectable by a user by means of user input via said user station.

14. A messaging and information system according to any of claims 6 to 13, wherein said system is arranged to associate a plurality of different definitions of message content with one definition of at least one characteristic of message-associated information to form a plurality of different combinations of a) message content and b) at least one characteristic of message-associated information, which different combinations said selecting means is capable of selecting between.

15. A messaging and information system according to any of claims 6 to 14, wherein said system is arranged to associate one definition of message content with a plurality of different definitions of at least one characteristic of message-associated information to form a plurality of different combinations of a) message content and b) at least one characteristic of message-associated information, which different combinations said selecting means is capable of selecting between.

16. A messaging and information system according to any of claims 6 to 15, wherein said system is arranged to associate a plurality of different definitions of message content with a plurality of different definitions of at least one characteristic of message-associated information to form a plurality of different combinations of a) message content and b) at least one characteristic message-associated information, which different combinations said selecting means is capable of selecting between.

17. A messaging and information system according to any preceding claim, wherein said at least one characteristic of message-associated information includes information content to be provided via said user station.

18. A messaging and information system according to claim 17, wherein said information content is programmable by a user of said user station.

19. A messaging and information system according to any of claims 15 to 18, wherein said plurality of different definitions of at least one characteristic of message-associated information each differ at least in that each includes a different definition of information content to be provided via said user station.

20. A messaging and information system according to any preceding claim, wherein said at least one characteristic of message-associated information includes a timing characteristic for a time-delay alert to be provided via said user station.

21. A messaging and information system according to claim 20, wherein said timing characteristic is programmable by a user of said user station.

22. A messaging and information system according to any of claims 15, 16, 20 or 21, wherein said plurality of different definitions of at least one characteristic of message-associated information each differ at least in that each includes a different definition of timing characteristics for a time-delay alert to be provided via said user station.

23. A messaging and information system according to claim 22, wherein said plurality of different definitions of at least one characteristic of message-associated information include a first definition of timing characteristics for a time-delay alert to be provided via said user station, according to which a time-delay alert is set, and a second definition of timing characteristics for a time-delay alert to be provided via said user station, according to which no time-delay alert is set.

24. A messaging and information system according to any preceding claim, wherein the system comprises receiving means for receiving an incoming call from a calling party, and wherein the remote party to which said selected message is sent is said calling party.

25. A messaging and information system according to any preceding claim, wherein said system for use in a telecommunications network and wherein said user station is a mobile station.

26. A messaging and information system according to claim 25, wherein said system is provided on said mobile station.

27. A messaging and information system according to any preceding claim, wherein said system is provided at least partly on a fixed network node in said telecommunications network.

28. A messaging and information system according to any preceding claim, wherein the system further comprises means for deactivating said message-associated information in response to detection of a deactivation event prior to the provision of said message-associated information.

29. A messaging and information system according to claim 28, wherein the deactivating means is arranged to delete said message-associated information in response to detection of the user contacting the remote party, or the remote party contacting the user.

30. A messaging and information system according to any preceding claim, wherein the message comprises an alphanumeric text message.

31. A messaging and information system according to any preceding claim, wherein the message comprises a speech signal.

32. A messaging and information system according to any preceding claim, wherein the message is originated from a fixed network node.

33. A messaging and information system according to claim 32, wherein the message-originating fixed network node is arranged to provide an automated voice response message.

34. A messaging and information system according to any preceding claim, which system is adapted to provide a calling function based on said message-related information, whereby the user is able to select to place a call using said telephone calling identifier from said message-related information and without needing to separately enter said telephone calling identifier.

35. A messaging and information system for use in a telecommunications network, said station comprising:
storage means arranged to store at least one alphanumeric message;
transmitting means for transmitting said message to a remote party; and
processing means arranged to generate a time-delay alert on a user station to remind the user to contact the remote party on the basis of transmission of said message.

36. A user station for use in a telecommunications network, said station comprising:
a plurality of user-operable inputs;
a storage system for storing a plurality of selectable messages; and
a memory portion,
the user station being responsive to selection of one of said user-operable inputs so as to select first and second messages from said storage system, the user station being arranged to transmit said selected first message to a remote party and to store said selected second message in said memory portion in association with data specifying an alert time therefor, wherein the user station is further adapted for generating an alert comprising said stored second message at said alert time.

37. A user station for use in a telecommunications network comprising:
a plurality of user-operable inputs;
a storage system for storing a plurality of selectable messages; and
a memory portion,
the user station having a first mode of operation and a second mode of operation, the user station being adapted for switching from said first mode to said second mode in response to the receipt of an incoming call, wherein in said second mode said user-operable inputs are adapted for selecting a first message and a second message from said plurality of messages, the user station being arranged for transmitting said selected first message to a remote party and for storing said selected second message in said memory portion in association with data specifying an alert time therefor, wherein the user station is further adapted for generating an alert comprising said stored second message at said alert time.

38. A user station for use in a telecommunications network according to claim 37, wherein the remote party to which said first message is sent is a calling party.

39. A user station for use in a telecommunications network according to claim 37 or 38, wherein said user station is arranged to automatically select said second message in response to selection of the first message.

40. A user station for use in a telecommunications network according to any of claims 37 to 39, further having user-adjustable alert settings for modifying said alert times associated with said second messages.

41. A method of rejecting a call at a user station in a telecommunications network, and storing a plurality of messages, said method comprising:
selecting one of said plurality of messages, in response to an event such as receiving an incoming call;
transmitting said selected message to a remote party; and
generating a time-delay alert on the user station to remind a user to contact the remote party based on the message selected and/or the identity of the remote party.
